# EUROPÄISCHE PATENTSCHRIFT

(11) **EP 1 071 889 B1**
(45) Veröffentlichungstag und Bekanntmachung des Hinweises auf die Patenterteilung: **04.12.2002**
(21) Anmeldenummer: 99929013.3
(22) Anmeldetag: 20.04.1999
(51) Int. Cl.: F16G 13/16

(54) **ENERGIEFÜHRUNGSKETTENSYSTEM**
ENERGY TRANSMISSION CHAIN SYSTEM
SYSTEME DE CHAINE DE GUIDAGE D'ELEMENTS DE TRANSPORT D'ENERGIE

(30) Priorität: 20.04.1998 DE 29806969 U
(43) Veröffentlichungstag der Anmeldung: 31.01.2001
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Patentanwälte Lippert, Stachow, Schmidt & Partner
(86) Internationale Anmeldenummer: DE9901198
(87) Internationale Veröffentlichungsnummer: WO99054641

(56) Entgegenhaltungen:
- DE-U- 29 806 969
- DE-U- 29 820 117

## Beschreibung

Die Erfindung betrifft ein System aus Verbraucher und Versorger mit jeweils einem Anschlußpunkt, wobei Verbraucher und Versorger unter Änderung des vertikalen Abstandes der Anschlußpunkte verfahrbar sind, mit einer zwischen den Anschlußpunkten angeordneten Energieführungskette zur Führung von Leitungen wie Schläuchen, Kabeln oder dergleichen, wobei benachbarte Kettenglieder gelenkig in einer Ebene unter Ausbildung eines Krümmungsbereichs gegeneinander verschwenkbar miteinander verbunden sind. Des weiteren betrifft die Erfindung eine Energieführungskette für ein oben genanntes System, wobei die Kettenglieder jeweils zwei Seitenteile aufweisen, die über mindestens einen Quersteg miteinander verbunden sind.

Derartige Systeme mit vertikal zueinander verfahrbarem Verbraucher und versorger werden im Maschinenbau vielfältig eingesetzt, insbesondere auch in Regalfördersystemen, z.B. bei Fördersystemen für Hochregallager.

Zumeist besteht der Verbraucher aus einer Greifeinrichtung, welche Paletten oder andere Behälter einem Regal entnehmen oder in diesem ablegen kann. Der Verbraucher ist hierzu zumeist in der Regalgasse in der Höhe verfahrbar. Der entsprechende Versorger ist zumeist oberhalb des Regalsystems auf einer definierten und festen Höhe in Art einer Laufkatze angeordnet und kann dabei sowohl innerhalb der Gassen als auch quer zu den Regalen oberhalb derselben verfahren werden, so daß die zur Be- und Entladung der Regale dienende Greifeinrichtung in verschiedenen Regalgassen einsetzbar ist.

Soll die Greifeinrichtung von einer Regalgasse zu einer anderen wechseln, so ist diese bis oberhalb der Regale zu verfahren, um diese überqueren zu können. Hierzu müssen die in der Energieführungskette geführten versorgungsleitungen für die Greifvorrichtung mittels einer Aufwickelvorrichtung in Art einer Kabeltrommel, die auf Höhe oder oberhalb des Versorgers angeordnet ist, aufgewickelt werden, damit die Energieführungskette bei der Überquerung der Regale mit diesen nicht kollidiert. Die Anordnung und der Betrieb der Aufwickelvorrichtung sind jedoch vergleichsweise aufwendig und kostenintensiv. Eine zwischen den Anschlußpunkten U-förmig durchhängende Energieführungskette kann für diese Anwendungszwecke meist nicht eingesetzt werden.

Der Erfindung liegt die Aufgabe zugrunde, ein System aus Verbraucher und Versorger mit einer Energieführungskette zu schaffen, welches konstruktiv einfach ausgeführt ist und sicher und mit möglichst geringem Wartungsaufwand betrieben werden kann, sowie eine Energieführungskette, deren Konstruktion insbesondere auf ein derartiges Sytem abgestimmt ist.

Diese Aufgabe wird erfindungsgemäß dadurch gelöst, daß an der in dem System jeweils in vertikaler Richtung tieferliegenden Einrichtung, das heißt jeweils an dem Verbraucher bzw. Versorger, eine Aufnahmeeinrichtung zur Ablage der Energieführungskette vorgesehen ist. Des weiteren wird die Aufgabe durch eine Energieführungskette mit den Merkmalen des unabhängigen Anspruchs 9 gelöst.

Vorteilhafte Weiterbildungen des Systems bzw. der Energieführungskette sind den jeweiligen Unteranprüchen zu entnehmen.

Die Aufnahmeeinrichtung kann dabei beispielsweise aus einer Plattform oder einem nach oben hin offenen Kasten bestehen, auf der oder in dem die Energieführungskette ablegbar ist, wenn der vertikale Abstand zwischen Verbraucher und Versorger verringert wird und die Energieführungskette eine Überlänge aufweist. Eine Aufwickelvorrichtung mit einem zusätzlichen motorischen Antrieb und dergleichen wird hierdurch entbehrlich. Die Aufnahmeeinrichtung kann vielmehr unmittelbar an der jeweiligen Einrichtung befestigt und beispielsweise mit dieser verfahrbar sein. Ist die in vertikaler Richtung tieferliegende Einrichtung ortsfest am Boden angeordnet und beispielsweise lediglich der Verbraucher in vertikaler Richtung verfahrbar, so kann die Aufnahmeeinrichtung ebenfalls ortsfest am Boden angeordnet sein.

Die Aufnahmeeinrichtung kann dabei derart ausgebildet sein, daß insbesondere zickzackförmig zusammengelegte Energieführungsketten aufgenommen werden können, beispielsweise in Form eines langgestreckten Kastens. Die Energieführungskette kann hierbei in mehreren Lagen übereinander abgelegt werden, die jeweils durch Umlenkbereiche mit einem Umlenkradius von 180° oder größer verbunden sind.

Die Aufnahmeeinrichtung kann auch derart ausgeführt sein, daß eine Energieführungskette wendelförmig mit mehreren aufeinander aufliegenden kreisbogenförmigen Abschnitten ablegbar ist, wobei die Wendeln in einer horizontalen Ebene angeordnet sind.

Eine in dem erfindungsgemäßen System einsetzbare Energieführungskette kann derart ausgebildete und miteinander verbundene Kettenglieder aufweisen, so daß mittels dieser jeweils im Abstand voneinander Umlenkbereiche mit gegensinniger Krümmung ausgebildet werden können, wobei zwischen den Umlenkbereichen geradlinige, im wesentlichen starre Abschnitte vorgesehen sind. Unter gegensinnigen Krümmungen sind solche zu verstehen, die entlang der Längserstreckung der Energieführungskette jeweils im Uhrzeigersinn bzw. entgegen dem Uhrzeigersinn ausgebildet sind, so daß bei einer alternierenden Anordnung derselben die Energieführungskette meandrierend oder zickzackförmig ablegbar ist.

Die Umlenkradien in den Umlenkbereichen bei abgelegter Energieführungskette können jeweils 180° oder mehr betragen. Die zwischen den Umlenkbereichen angeordneten, geradlinigen Abschnitte können großflächig oder lediglich punktuell aufeinander abglegbar sein. Hierdurch nimmt die Energieführungskette einen vergleichsweise geringen Raumbedarf ein, der insbesondere auch nicht wesentlich über die Breite der Energieführungskette hinaus geht.

Um ein Abrutschen der geradlinigen Bereiche der Energieführungskette voneinander im zusammengelegten Zustand zu verhindern, können die Seitenlaschen der Kettenglieder jeweils Führungsstege aufweisen, die mit korrespondierenden Führungen an den benachbarten bzw. oberhalb oder unterhalb des jeweiligen Kettengliedes angeordneten weiteren Kettengliedern korrespondieren, so daß die Anordnung der abgelegten Energieführungskette in sich stabilisiert wird. Die Führungen können dabei insbesondere in den Umlenkbereichen schon während der Zusammenfaltung der Energieführungskette miteinander zum Eingriff kommen, so daß der einem Umlenkbereich nachfolgende starre Abschnitt der Energieführungskette exakt zu dem bereits abgelegten Abschnitt ausgerichtet wird.

Die im wesentlichen starren Bereiche der Energieführungskette erstrecken sich über ein Vielfaches der Längserstreckung eines Kettengliedes des Umlenkbereichs, vorteilhafterweise überbrücken sie den Abstand zwischen benachbarten Umlenkbereichen vollständig.

Im elongierten Zustand der Energieführungskette, das heißt wenn diese ihre maximale Länge einnimmt, können die Umlenkbereiche gestreckt ausgebildet sein, wobei die Umlenkbereiche gegebenenfalls auch derart ausgebildet sein können, daß diese in Krümmungen entgegengesetzter Richtung abwinkelbar sind.

Die Kettenglieder können auch beispielsweise derart ausgebildet sein, wozu entsprechende Anschläge vorgesehen sein können, daß die Abwinkelungen der Umlenkbereiche im elongierten Zustand der Energieführungskette signifikant weniger als 180° betragen.

Es können Mittel vorgesehen sein, die insbesondere bei sehr langen Energieführungsketten die Verschwenkrichtung eines Abschnittes, der einem bereits horizontal abgelegten Abschnitt folgt, vorbestimmt. Hierdurch wird auch bei langen Energieführungsketten und schneller Verfahrung des Verbrauchers bzw. Versorgers in vertikaler Richtung die Verschwenkrichtung des als nächsten abzulegenden Abschnittes der Energieführungskette stets definiert. Derartige Mittel können durch entsprechende Ausbildung der Anschläge an den Kettengliedern, durch Federelemente oder dergleichen ausgeführt sein.

Die starren Bereiche der Energieführungskette können durch besondere Kettenglieder gebildet werden, die verschieden zu den Kettengliedern der abwinkelbaren Bereiche ausgebildet sind.

Vorteilhafterweise sind die starren Bereiche aus einzelnen Kettengliedern zusammengesetzt, wobei die jeweils seitlich gegenüberliegenden Gelenkbereiche eines Paares von Kettengliedern nur in zueinander entgegengesetzten Richtungen abwinkelbar sind. Hierdurch ist es möglich, auch die starren Bereiche aus Kettengliedern zusammenzusetzen, mittels derer auch die abwinkelbaren Bereiche aufgebaut werden können. Durch die besondere Anordnung der Gelenkbereiche sperren sich die Kettenglieder gegenseitig, da die jeweils gegenüberliegenden Gelenkbereiche nur gegensinnig zueinander abwinkelbar sind.

Eine derartige Anordnung der Gelenkbereiche kann insbesondere dann einfach erzielt werden, wenn die Kettenglieder gegenüberliegende Seitenlaschen aufweisen, die durch Querstege lösbar miteinander verbunden sind. Es kann somit beispielsweise ein erster Strang von Seitenlaschen gebildet sein, die zueinander nur in einer Richtung, z.B. im Uhrzeigersinn, abwinkelbar sind, wobei der gegenüberliegende Strang von Seitenlaschen nur entgegen dem Uhrzeigersinn abwinkelbar ist. Es ist nicht notwendig, daß ein in einer Richtung abwinkelbarer Strang von Seitenlaschen sich über die gesamte Länge eines starren Bereiches der Energieführungskette erstreckt.

Die Seitenlaschen der gegensinnig zueinander abwinkelbaren Teilstränge können dabei baugleich ausgeführt sein, wobei die Änderung der möglichen Abwinkelungsrichtung dadurch erzielt wird, daß die Seitenlasche jeweils in einer entsprechenden Orientierung an der Energieführungskette angeordnet ist. Insgesamt können bei entsprechender Ausführung und Orientierung der Seitenlaschen auch die Umlenkbereiche und starren Bereiche der Energieführungskette aus baugleichen Seitenlaschen zusammengestzt sein.

Um die Verschwenkbarkeit benachbarter Seitenlaschen zu begrenzen, können an diesen entsprechende Anschläge vorgesehen sein.

Die Seitenlaschen können jeweils gekröpft ausgeführt sein, so daß auch die starren Bereiche der Energieführungskette durch bisher bekannte Seitenlaschen einfach zusammenfügbar sind. Die Seitenlaschen können auch ungekröpft ausgeführt sein, wobei im mittleren Bereich der Seitenlaschen Dickstellenbereiche vorgesehen sind, an denen Querstege mittels entsprechender Befestigungsmittel befestigbar oder einteilig angeformt sind, wobei die Endbereiche der Seitenlaschen mit Gelenkverbindungen versehen sind, wie sie bei Energieführungsketten bekannt sind.

Die Erfindung sei im nachfolgenden beispielhaft beschrieben und anhand der Figuren beispielhaft erläutert. Es zeigen:
- Fig. 1: eine Ansicht eines Systems aus Verbraucher, Versorger und Energieführungskette im ausgefahrenen (links) und eingefahrenem (rechts) Zustand;
- Fig. 2: eine vergrößerte Ansicht eines Systems nach Fig. 1 im eingefahrenen Zustand;
- Fig. 3: zwei zu einem starren Bereich zusammenfügbare Seitenteile in Draufsicht auf eine erste Seitefläche (links), eine gegenüberliegende Seitenfläche (rechts) und in stirnseitiger Ansicht;
- Fig. 4: je zwei zu einem starren Bereich zusammengefügte Seitenteile nach Fig. 3, die jeweils Ausschnitte gegenüberliegender Stränge von Seitenteilen bilden.

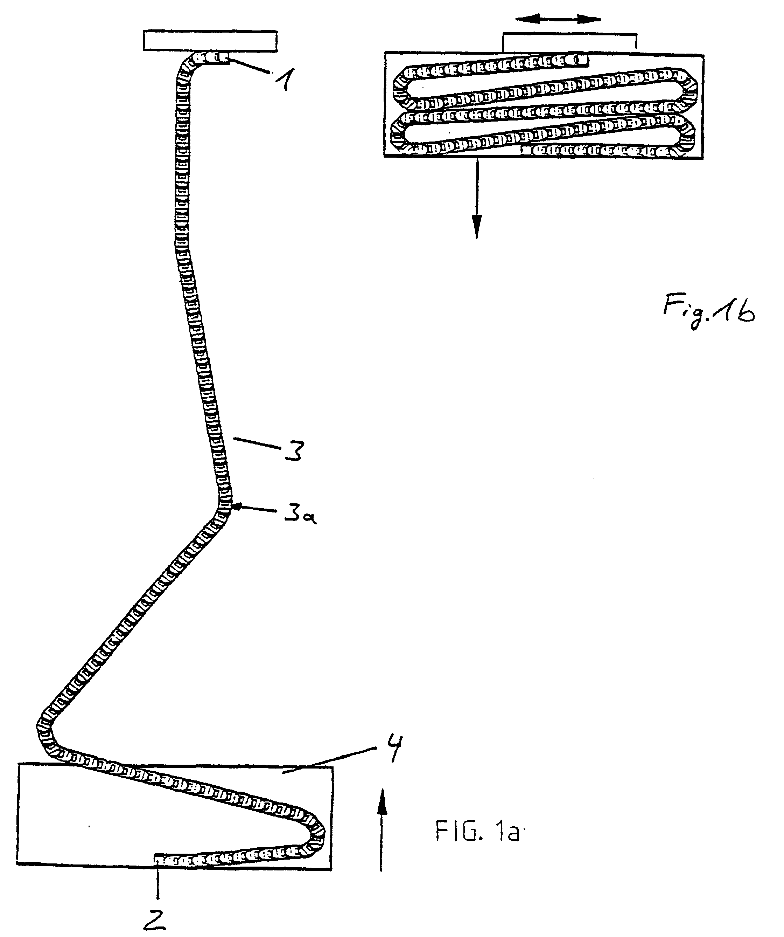

In Fig. 1 ist ein System mit einem ersten Anschluß 1 z.B. für Versorger, einem zweiten Anschluß 2 z.B. für einen Verbraucher und einer zwischen diesen angeordneten Energieführungskette 3 dargestellt, wobei die Anschlußpunkte 1, 2 von Versorger und Verbraucher horizontal bzw. vertikal zueinander verfahrbar sind. Die Energieführungskette 3 mit den Kettengliedern 3a ist in einer kastenförmigen Aufnahmeeinrichtung 4 abgelegt, die gegebenenfalls jedoch auch lediglich aus einer Ablagefläche bestehen kann.

Die Anordnung in vertikaler Richtung bzw. Verfahrbarkeit von versorger bzw. Verbraucher ist jedoch für die vorliegende Erfindung nicht relevant.

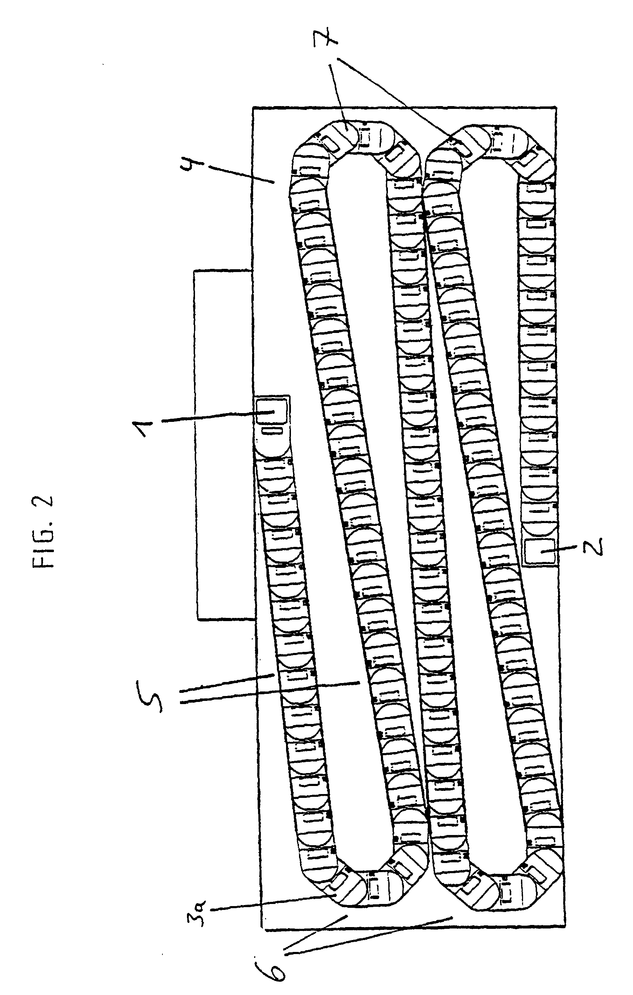

Die Energieführungskette ist in Fig. 2 zickzackförmig abgelegt, so daß einem im wesentlichen horizontal angeordneten Bereich 5 der Energieführungskette ein verschwenkbarer Umlenkbereich 6, 7 folgt, wobei die Umlenkbereiche 6, 7 eine gegensinnige Krümmung aufweisen.

Im entfalteten oder teilweise entfaltetem Zustand sind die Umlenkbereiche im Bereich des oberen Endes der Energieführungskette gestreckt oder nahezu gestreckt angeordnet (siehe Fig. 1).

Die Seitenteile sind in den Umlenkbereichen 6, 7 derart zueinander angeordnet und ausgebildet, wie dies auch bei bisher bekannten Energieführungsketten der Fall ist.

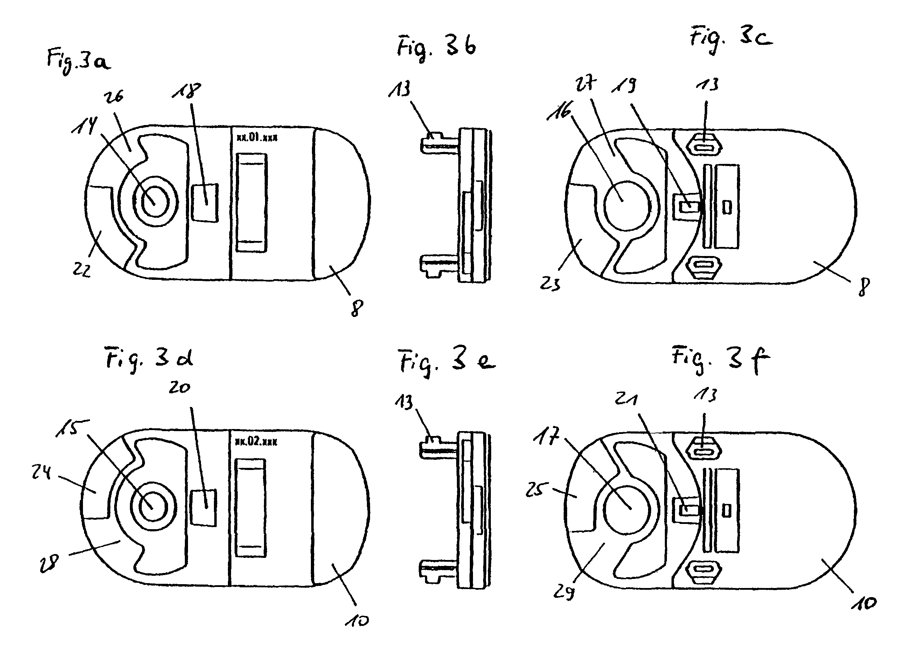

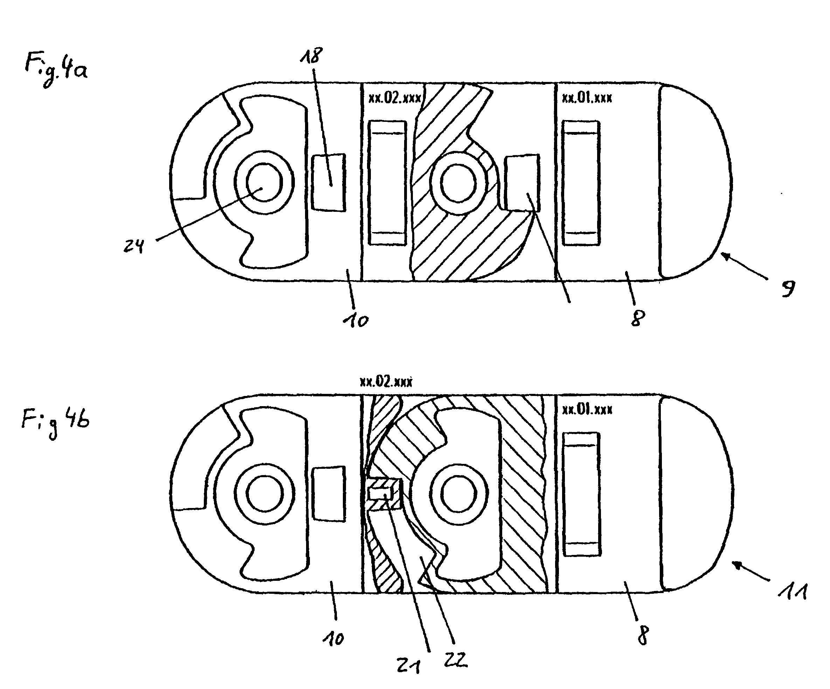

Die starren Bereich 5 ( in Fig. 2 durch dicke Linien hervorgehoben) werden dabei aus den in Fig. 3 und 4 dargestellten Seitenlaschen aufgebaut, wobei gegenüberliegende Seitenlaschen jeweils lösbar mittels der Rastzapfen 13 über Querstege verbunden werden. Die Seitenlaschen 8, 10 weisen jeweils Gelenkzapfen 14, 15 auf, die in korrespondierenden Ausnehmungen 17, 16 der benachbarten Seitenlasche geführt werden, die im montierten Zustand Gelenkbereiche bilden.

Wie aus Fig. 4 hervorgeht, wird ein Strang 9, 11 von Seitenlaschen jeweils durch alternierende Seitenlaschen 8, 10 zusammengesetzt. In jedem der Gelenkbereiche sind dabei Anschläge 18, 19, 20, 21 vorgesehen, die in kreissegmentförmigen Ausnehmungen 22 - 29 unter Verschwenkung der Seitenlaschen führbar sind, bis diese mit den korrespondierenden Anschlagflächen zum Angriff kommen.

Wie aus Fig. 4 hervorgeht, sind die starren Bereiche 5 alternierend aus gekröpften Seitenlaschen 8, 10 zusammengesetzt. Hierbei kann z.B. das in Fig. 4 (oben) dargestellte Paar von Seitenlaschen (Teil des Stranges 9) nur nach oben hin abgewinkelt, das in Fig. 4 (unten) dargestellte Paar (Teil des Stranges 11) nur nach unten hin abgewinkelt werden (d.h. der Öffnungswinkel weist jeweils nach oben oder unten). Bezüglich der jeweils anderen Verschwenkrichtung befinden sich die Seitenlaschen jeweils in der Anschlagposition. Werden die beiden dargestellten nun durch Querstege miteinander verbunden, resultiert ein im wesentlichen starres Teilstück einer Energieführungskette als Ausschnitt eines der Bereiche 5.

Der starre Bereich 5 der Energieführungskette kann auch durch Seitenlaschen baugleicher Art aufgebaut werden, die nicht gekröpft ausgeführt sind.

### Bezugszeichenliste

- 1: Anschlußpunkt für versorger
- 2: Anschlußpunkt für Verbraucher
- 3: Energieführungskette
- 3a: Kettenglied
- 4: Auffangeinrichtung
- 5: starrer Bereich
- 6: Umlenkbereich
- 7: Umlenkbereich
- 8: Seitenlasche
- 9: Strang
- 10: Seitenlasche
- 11: Strang
- 12: Quersteg
- 13: Zapfen
- 14, 15: Gelenkzapfen
- 16, 17: Gelenkzapfenaufnahme
- 18 - 21: Anschlag
- 22 - 29: Ausnehmung

## Patentansprüche

1. System aus Verbraucher und Versorger mit jeweils einem Anschlußpunkt (12), wobei Verbraucher und Versorger unter Änderung des vertikalen Abstandes der Anschlußpunkte verfahrbar sind, mit einer zwischen den Anschlußpunkten angeordneten Energieführungskette (3) zur Führung von Leitungen wie Schläuchen, Kabeln oder dergleichen, wobei benachbarte Kettenglieder gelenkig in einer Ebene unter Ausbildung eines Krümmungsbereichs gegeneinander verschwenkbar miteinander verbunden sind, **dadurch gekennzeichnet, daß** an dem jeweils in vertikaler Richtung tiefer liegendem Verbraucher bzw. Versorger eine Aufnahmeeinrichtung (4) zur Ablage der Energieführungskette (3) vorgesehen ist.

2. System nach Anspruch 1, **dadurch gekennzeichnet, daß** die Aufnahmeeinrichtung unmittelbar an der in vertikaler Richtung tiefer liegenden Einrichtung von Versorger oder Verbraucher befestigt ist.

3. System nach Anspruch 2, **dadurch gekennzeichnet, daß** die Aufnahmeeinrichtung (4) mit der Einrichtung verfahrbar ist.

4. System nach Anspruch 1 oder 2, **dadurch gekennzeichnet, daß** die Aufnahmeeinrichtung ortsfest am Boden angeordnet ist.

5. System nach einem der Ansprüche 1 bis 4, **dadurch gekennzeichnet, daß** die Aufnahmeeinrichtung (4) als nach oben offener Kasten ausgeführt ist, in dem die Energieführungskette (3) ablegbar ist.

6. System nach einem der Ansprüche 1 bis 5, **dadurch gekennzeichnet, daß** die Energieführungskette (3) zickzackförmig in mehreren Lagen übereinander zusammenlegbar ist.

7. System nach einem der Ansprüche 1 bis 5, **dadurch gekennzeichnet, daß** die Energieführungskette (3) wendelförmig mit mehreren aufeinander liegenden kreisbogenförmigen Abschnitten ablegbar ist, wobei die Wendeln in einer horizontalen Ebene angeordnet sind.

8. Energieführungskette zur Führung von Leitungen wie Schläuchen oder Kabeln zwischen zwei im vertikalen Abstand zueinander veränderlichen Anschlußpunkten in einem System nach Anspruch 1, wobei die Energieführungkette Kettenglieder mit jeweils zwei Seitenteilen aufweist, die über mindestens einen Quersteg miteinander verbunden sind, und wobei benachbarte Kettenglieder gelenkig in einer Ebene unter Ausbildung eines Krümmungsbereichs gegeneinander verschwenkbar miteinander verbunden sind, **dadurch gekennzeichnet, daß** die Energieführungskette (3) zickzackförmig in mehreren Lagen übereinander zusammenlegbar ist, wobei die Lagen jeweils durch Umlenkbereiche (6, 7) mit einem Umlenkradius miteinander verbunden sind.

9. Energieführungskette nach Anspruch 8, **dadurch gekennzeichnet, daß** jeweils im Abstand voneinander Kettenglieder (3a) vorgesehen sind, die Bereiche (6,7) mit zueinander gegensinnigen Krümmungsradien bilden, wobei zwischen den abwinkelbaren Bereichen (6,7) der Energieführungskette (3) im wesentlichen starre Bereiche (5) vorgesehen sind.

10. Energieführungskette nach Anspruch 9, **dadurch gekennzeichnet, daß** die starren Bereiche (5) aus Kettengliedern (3a) derart zusammengesetzt sind, daß die jeweils seitlich gegenüberliegenden Gelenkbereiche eines Paares benachbarter Kettenglieder (3a) nur gegensinnig zueinander abwinkelbar sind.

11. Energieführungskette nach Anspruch 9 oder 10, **dadurch gekennzeichnet, daß** die Energieführungskette (3) in den abwinkelbaren als auch den im wesentlichen starren Bereichen (5,6,7) aus Kettengliedern (3a) mit zueinander baugleichen Seitenlaschen (8) besteht.

12. Energieführungskette nach einem der Ansprüche 9 - 11, **dadurch gekennzeichnet, daß** die Seitenlaschen (8) jeweils Anschläge (18-21) zur Begrenzung des Verschwenkwinkels benachbarter Seitenlaschen (8) aufweisen.

13. Energieführungskette nach einem der Ansprüche 8 - 12, **dadurch gekennzeichnet, daß** die Anschläge (18-21) eines Paares benachbarter Seitenlaschen (8) bei geradliniger Anordnung der Seitenlaschen (8) und in einer abgewinkelten Stellung derselben miteinander zur Anlage kommen.

14. Energieführungskette nach einem der Ansprüche 9 - 13, **dadurch gekennzeichnet, daß** die Seitenlaschen (8) gekröpft ausgeführt sind.

15. Energieführungskette nach einem der Ansprüche 8 - 14, **dadurch gekennzeichnet, daß** die Seitenlaschen (8) der Kettenglieder (3a) jeweils Führungsstege aufweisen, die mit korrespondierenden Führungen an den benachbarten Kettengliedern korrespondieren.

## Claims

1. System comprising a consumer and a supplier, each having a connecting point (12), where the consumer and the supplier can be traversed, thereby varying the vertical distance between the connecting points, with an energy transmission chain (3) located between the connecting points for guiding lines, such as tubes, cables or the like, where adjacent chain links being connected to each other can pivot in relation to each other in an articulated manner on a plane, forming a curved area, **characterised in that** a receiving device (4) for depositing the energy transmission chain (3) is provided on the consumer or supplier lying lower down in the vertical direction.

2. System according to Claim 1, **characterised in that** the receiving device is mounted directly on the supplier or consumer device lying lower down in the vertical direction.

3. System according to Claim 2, **characterised in that** the receiving device (4) is traversable with the device.

4. System according to Claim 1 or 2, **characterised in that** the receiving device is mounted on the floor in stationary fashion.

5. System according to one of Claims 1 to 4, **characterised in that** the receiving device (4) is designed as a box open at the top, in which the energy transmission chain (3) can be deposited.

6. System according to one of Claims 1 to 5, **characterised in that** the energy transmission chain (3) can be folded in zigzag fashion in several layers one on top of the other.

7. System according to one of Claims 1 to 5, **characterised in that** the energy transmission chain (3) can be deposited in coil fashion, with several sections in the form of circular arcs lying one on top of the other, the coils being arranged in a horizontal plane.

8. Energy transmission chain for guiding lines, such as tubes or cables, between two connecting points with a variable vertical distance between them in a system according to Claim 1, where the energy transmission chain displays chain links each having two lateral parts that are interconnected by means of at least one transverse pin and where adjacent chain links being connected to each other can pivot in relation to each other in an articulated manner on a plane, forming a curved area, **characterised in that** the energy transmission chain (3) can be folded in zigzag fashion in several layers one on top of the other, where the layers are each interconnected by deflection zones (6, 7) with a deflection radius.

9. Energy transmission chain according to Claim 8, **characterised in that** interspaced chain links (3a) are provided that form sections (6, 7) with opposite radii of curvature, where essentially rigid sections (5) are provided between the bendable sections (6, 7) of the energy transmission chain (3).

10. Energy transmission chain according to Claim 9, **characterised in that** the rigid sections (5) are assembled from chain links (3a) in such a way that the respectively laterally opposite articulated areas of a pair of adjacent chain links (3a) can only be bent in opposite directions relative to each other.

11. Energy transmission chain according to Claim 9 or 10, **characterised in that** both the bendable and the essentially rigid sections (5, 6, 7) of the energy transmission chain (3) consist of chain links (3a) with lateral parts (8) of identical design.

12. Energy transmission chain according to one of Claims 9 to 11, **characterised in that** the lateral parts (8) each have mechanical stops (18 to 21) to restrict the pivoting angle of adjacent lateral parts (8).

13. Energy transmission chain according to one of Claims 8 to 12, **characterised in that** the mechanical stops (18 to 21) of a pair of adjacent lateral parts (8) come into contact with each other when the lateral parts (8) are in a straight arrangement and in a bent position of the same.

14. Energy transmission chain according to one of Claims 9 to 13, **characterised in that** the lateral parts (8) are of cranked design.

15. Energy transmission chain according to one of Claims 8 to 14, **characterised in that** the lateral parts (8) of the chain links (3a) each display guide pins that match corresponding guides on the adjacent chain links.

## Revendications

1. Système constitué par un consommateur et par un ravitailleur avec un point de raccordement (12) respectif, le consommateur et le ravitailleur étant déplaçables par variation de la distance verticale des points de raccordement, comportant une chaîne de guidage d'énergie (3) agencée entre les points de raccordement pour guider des conduites telles que des tuyaux, des câbles ou similaires, dans lequel des maillons de chaîne voisins avec faculté de pivotement les uns par rapport aux autres sont reliés de manière articulée dans un plan en formant une région de courbure, **caractérisé en ce qu'**il est prévu sur le consommateur le ravitailleur respectif situé plus bas en direction verticale une installation de réception (4) pour déposer la chaîne de guidage d'énergie (3).

2. Système selon la revendication 1, **caractérisé en ce que** l'installation de réception est fixée directement sur l'installation située plus bas en direction verticale, du consommateur ou du ravitailleur.

3. Système selon la revendication 2, **caractérisé en ce que** l'installation de réception (4) peut être déplacée avec l'installation.

4. Système selon l'une ou l'autre des revendications 1 et 2, **caractérisé en ce que** l'installation de réception est agencée stationnaire au sol.

5. Système selon l'une des revendications 1 à 4, **caractérisé en ce que** l'installation de réception (4) est réalisée sous forme de caisson ouvert vers le haut, dans lequel on peut déposer la chaîne de guidage d'énergie (3).

6. Système selon l'une des revendications 1 à 5, **caractérisé en ce que** la chaîne de guidage d'énergie (3) peut être pliée en forme de zigzag en plusieurs couches les unes sur les autres.

7. Système selon l'une des revendications 1 à 5, **caractérisé en ce que** la chaîne de guidage d'énergie (3) peut être déposée en spirale avec plusieurs tronçons situés les uns sur les autres en forme d'arc de cercle, les spires étant agencées dans un plan horizontal.

8. Chaîne de guidage d'énergie pour guider des conduites telles que des tuyaux ou des câbles entre deux points de raccordement variables en distance verticale l'un par rapport à l'autre dans un système selon la revendication 1, la chaîne de guidage d'énergie présentant des maillons de chaîne avec chacun deux parties latérales qui sont reliées l'une à l'autre au moyen d'au moins une entretoise, et des maillons de chaîne voisins avec faculté de pivotement les uns par rapport aux autres étant reliés de manière articulée dans un plan en formant une région de courbure, **caractérisée en ce que** la chaîne de guidage d'énergie (3) peut être pliée en forme de zigzag en plusieurs couches les unes sur les autres, les couches étant reliées les unes aux autres par des zones de déflexion (6, 7) respectives avec un rayon de déflexion.

9. Chaîne de guidage d'énergie selon la revendication 8, **caractérisée en ce qu'**il est prévu à distance respective des maillons de chaîne (3a) qui forment les zones de déflexion (6, 7) avec des rayons de courbure en sens inverse les uns par rapport aux autres, des zones (5) sensiblement rigides étant prévues entre les zones pliables (6, 7).

10. Chaîne de guidage d'énergie selon la revendication 9, **caractérisée en ce que** les zones rigides (5) sont composées de maillons de chaîne (3a) de telle sorte que les zones articulées respectives latéralement opposées d'une paire de maillons de chaîne (3a) voisins sont pliables les unes par rapport aux autres seulement en sens inverse.

11. Chaîne de guidage d'énergie selon l'une ou l'autre des revendications 9 et 10, **caractérisée en ce que** dans les zones pliables, comme dans les zones sensiblement rigides (5, 6, 7), la chaîne de guidage d'énergie (3) est constituée par des maillons de chaîne (3a) avec des pattes latérales (8) de même construction.

12. Chaîne de guidage d'énergie selon l'une des revendications 9 à 11, **caractérisée en ce que** les pattes latérales (8) présentent chacune des butées (18-21) pour limiter l'angle de pivotement de pattes latérales (8) voisines.

13. Chaîne de guidage d'énergie selon l'une des revendications 8 à 12, **caractérisée en ce qu'**en cas d'agencement rectiligne des pattes latérales (8) et dans une position coudée de celles-ci, les butées (18-21) d'une paire de pattes latérales (8) voisines viennent en appui les unes sur les autres.

14. Chaîne de guidage d'énergie selon l'une des revendications 9 à 13, **caractérisée en ce que** les pattes latérales (8) sont réalisées coudées.

15. Chaîne de guidage d'énergie selon l'une des revendications 8 à 14, **caractérisée en ce que** les pattes latérales (8) des maillons de chaîne (3a) présentent chacune des nervures de guidage qui correspondent aux guidages correspondants sur les maillons de chaîne voisins.
